# EUROPEAN PATENT APPLICATION

(11) **EP 4 266 562 A1**
(43) Date of publication of application: **25.10.2023**
(21) Application number: 22771564.6
(22) Date of filing: 18.03.2022
(51) Int. Cl.: H02K 15/04, H02K 15/085, B23K 26/21

(54) **METHOD FOR MANUFACTURING STATOR FOR ROTARY ELECTRIC MACHINE**

(30) Priority: 19.03.2021 JP 2021045433
(71) Applicant: AISIN CORPORATION, Kariya-shi, Aichi 448-8650 (JP); TOYOTA JIDOSHA KABUSHIKI KAISHA, Toyota-shi, Aichi 471-8571 (JP)
(72) Inventor: ONO, Hiroyuki, Kariya-shi, Aichi 448-8650 (JP)
(74) Representative: Kramer Barske Schmidtchen Patentanwälte PartG mbB
(86) International application number: PCT/JP2022/012872
(87) International publication number: WO 2022/196822

(57) **Abstract**

A method for manufacturing a stator for a rotating electrical machine is disclosed that includes: an installation step of installing coil pieces with a rectangular cross section for a stator coil in a stator core; and a joining step of joining ends of the coil pieces by laser welding after the installation step. The joining step includes a setting step of bringing the ends into contact with each other in a radial direction in such a manner that the ends cross over each other in an X-shape as viewed in the radial direction, and a radiation step of applying a laser beam with a wavelength of 0.6 µm or less in an axial direction toward a C-shaped side, as viewed in the radial direction, of a contact surface between the ends after the setting step. Part of the C-shaped side and part of an axially outer non-contact surface that is continuous with the contact surface between the ends are melted in the radiation step.

## Description

### TECHNICAL FIELD

The present disclosure relates to methods for manufacturing a stator for a rotating electrical machine.

### BACKGROUND ART

A method for manufacturing a stator is known in which ends of one coil piece and another coil piece for forming a stator coil for a rotating electrical machine are butted together and a laser beam is applied to those portions of the abutting ends that are to be welded together in such a manner that the radiation position moves in a loop (see, for example, Patent Document 1).

### Related Art Documents

### Patent Documents

Patent Document 1: Japanese Unexamined Patent Application Publication No. 2018-20340 (JP 2018-20340 A)

### SUMMARY OF THE INVENTION

### Problem to be Solved by the Invention

In such related art as described in Patent Document 1, the ends of the coil pieces that are to be butted together have been machined into a C-shape (arc-shaped surfaces curved outward in the axial direction) as viewed in the radial direction so that the side surfaces (surfaces facing a laser beam radiation source) of the ends of the coil pieces become smoothly continuous. There is room for cost reduction in terms of the machining cost.

Accordingly, in one aspect, it is an object of the present disclosure to enable ends of coil pieces to be properly joined together at relatively low machining cost.

### Means for Solving the Problem

According to one aspect of the present disclosure, a method for manufacturing a stator coil for a rotating electrical machine is provided that includes: an installation step of installing coil pieces with a rectangular cross section for a stator coil in a stator core; and
a joining step of joining ends of the coil pieces by laser welding after the installation step.

The joining step includes
a setting step of bringing the ends into contact with each other in a radial direction in such a manner that the ends cross over each other in an X-shape as viewed in the radial direction, and
a radiation step of applying a laser beam with a wavelength of 0.6 µm or less in an axial direction toward a C-shaped side, as viewed in the radial direction, of a contact surface between the ends after the setting step.

Part of the C-shaped side and part of an axially outer non-contact surface that is continuous with the contact surface between the ends are melted in the radiation step.

### Effects of the Invention

According to the present disclosure, it is possible to properly join the ends of the coil pieces at relatively low machining cost.

### BRIEF DESCRIPTION OF THE DRAWINGS

[FIG. 1] FIG. 1 is a sectional view schematically showing a sectional structure of a motor according to an embodiment.
[FIG. 2] FIG. 2 is a plan view of a stator core alone.
[FIG. 3] FIG. 3 is a diagram schematically showing a pair of coil pieces that is installed in the stator core.
[FIG. 4] FIG. 4 is a schematic front view of one coil piece.
[FIG. 5] FIG. 5 is a diagram showing joined tip ends of coil pieces and portions near the tip ends.
[FIG. 6] FIG. 6 is a diagram schematically showing a welding target portion 90 as viewed from the radiation side.
[FIG. 7A] FIG. 7A is a sectional view taken along line A-A in FIG. 5 passing through the welding target portion.
[FIG. 7B] FIG. 7B is a sectional view taken along line B-B in FIG. 5 passing through the welding target portion.
[FIG. 7C] FIG. 7C is a sectional view taken along line C-C in FIG. 5 passing through the welding target portion.
[FIG. 8] FIG. 8 is a diagram showing joined tip ends of coil pieces and portions near the tip ends according to a comparative example.
[FIG. 9] FIG. 9 is a diagram showing the relationship between the laser wavelength and the laser absorptivity of samples of various materials.
[FIG. 10] FIG. 10 is a diagram illustrating how the absorptivity changes during welding.
[FIG. 11A] FIG. 11A is an illustration of a keyhole etc. when a green laser is used.
[FIG. 11B] FIG. 11B is an illustration of a keyhole etc. when an infrared laser is used.
[FIG. 12] FIG. 12 is a diagram illustrating a welding method using the green laser according to the embodiment.
[FIG. 13] FIG. 13 is a schematic diagram showing an example of how laser output of one pass changes with the radiation position.
[FIG. 14] FIG. 14 is a schematic diagram showing another example of how laser output of one pass changes with the radiation position.
[FIG. 15] FIG. 15 is a flowchart schematically showing the flow of a method for manufacturing a stator of the motor.
[FIG. 16] FIG. 16 is a diagram illustrating a modification.
[FIG. 17] FIG. 17 is a supplementary diagram illustrating the radiation range (radiation direction) of a laser beam.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of explanation. In this specification, the term "predetermined" is used in the sense of "decided in advance."

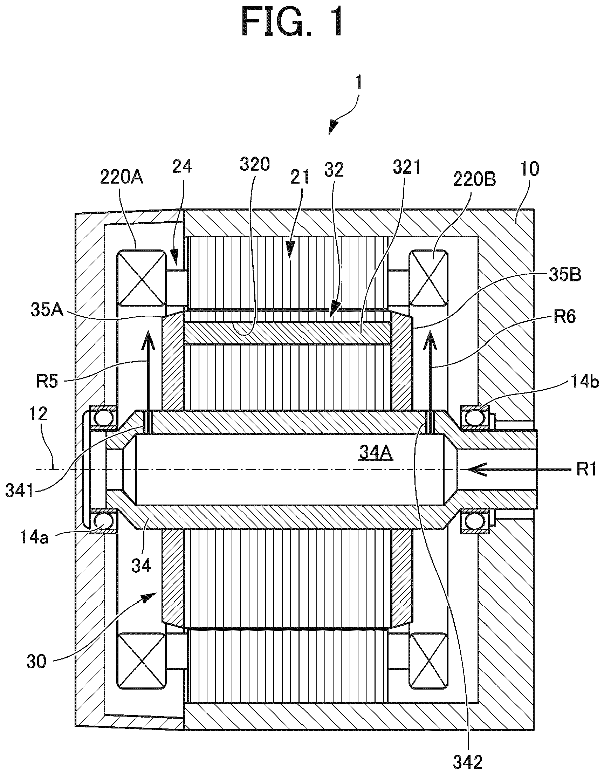

FIG. 1 is a sectional view schematically showing a sectional structure of a motor 1 (an example of a rotating electrical machine) according to an embodiment.

FIG. 1 shows a rotation axis 12 of the motor 1. In the following description, the axial direction refers to a direction in which the rotation axis (rotation center) 12 of the motor 1 extends, and the radial direction refers to a radial direction about the rotation axis 12. Therefore, the "radially outer side" and "radially outward" refer to a side away from the rotation axis 12, and the "radially inner side" and "radially inward" refers to a side toward the rotation axis 12. The circumferential direction corresponds to a rotation direction about the rotation axis 12.

The motor 1 may be a vehicle drive motor that is used in, for example, a hybrid electric vehicle or a battery electric vehicle. However, the motor 1 may be used for any other purposes.

The motor 1 is of an inner rotor type, and a stator 21 is provided so as to surround the radially outer side of a rotor 30. The radially outer side of the stator 21 is fixed to a motor housing 10.

The rotor 30 is disposed radially inward of the stator 21. The rotor 30 includes a rotor core 32 and a rotor shaft 34. The rotor core 32 is fixed to the radially outer side of the rotor shaft 34 and rotates with the rotor shaft 34. The rotor shaft 34 is rotatably supported by the motor housing 10 via bearings 14a, 14b. The rotor shaft 34 defines the rotation axis 12 of the motor 1.

The rotor core 32 is made of, for example, magnetic steel laminations having an annular shape. Permanent magnets 321 are inserted inside the rotor core 32. The number, arrangement, etc. of permanent magnets 321 may be determined as appropriate. In a modification, the rotor core 32 may be made of a green compact obtained by pressing and compacting magnetic powder.

End plates 35A, 35B are attached to both sides in the axial direction of the rotor core 32. The end plates 35A, 35B may have a function to adjust an imbalance of the rotor 30 (function to eliminate the imbalance by being cut etc.) in addition to a support function to support the rotor core 32.

As shown in FIG. 1, the rotor shaft 34 has a hollow portion 34A. The hollow portion 34A extends along the entire axial length of the rotor shaft 34. The hollow portion 34A may function as an oil passage. For example, oil is supplied to the hollow portion 34A from its one axial end as shown by arrow R1 in FIG. 1, and the oil flows along the radially inner surface of the rotor shaft 34, so that the rotor core 32 can be cooled from the radially inner side. The oil flowing along the radially inner surface of the rotor shaft 34 may be injected radially outward through oil holes 341, 342 formed in both ends of the rotor shaft 34 (arrows R5, R6) to cool coil ends 220A, 220B.

Although the motor 1 having a specific structure is shown in FIG. 1, the motor 1 may be have any structure as long as it has a stator coil 24 (described later) joined by welding. Accordingly, for example, the rotor shaft 34 may not have the hollow portion 34A, or may have a hollow portion with an inside diameter significantly smaller than that of the hollow portion 34A. While a specific cooling method is disclosed in FIG. 1, the motor 1 may be cooled by any method. Therefore, for example, an oil introduction pipe inserted into the hollow portion 34A may be provided, or oil may be dropped from an oil passage in the motor housing 10 from the radially outer side toward the coil ends 220A, 220B.

Although FIG. 1 shows the inner rotor motor 1 in which the rotor 30 is disposed inside the stator 21, the present disclosure may be applied to other types of motors. For example, the present disclosure may be applied to an outer rotor motor in which the rotor 30 is concentrically disposed outside the stator 21, or a dual rotor motor in which the rotor 30 is disposed both outside and inside the stator 21.

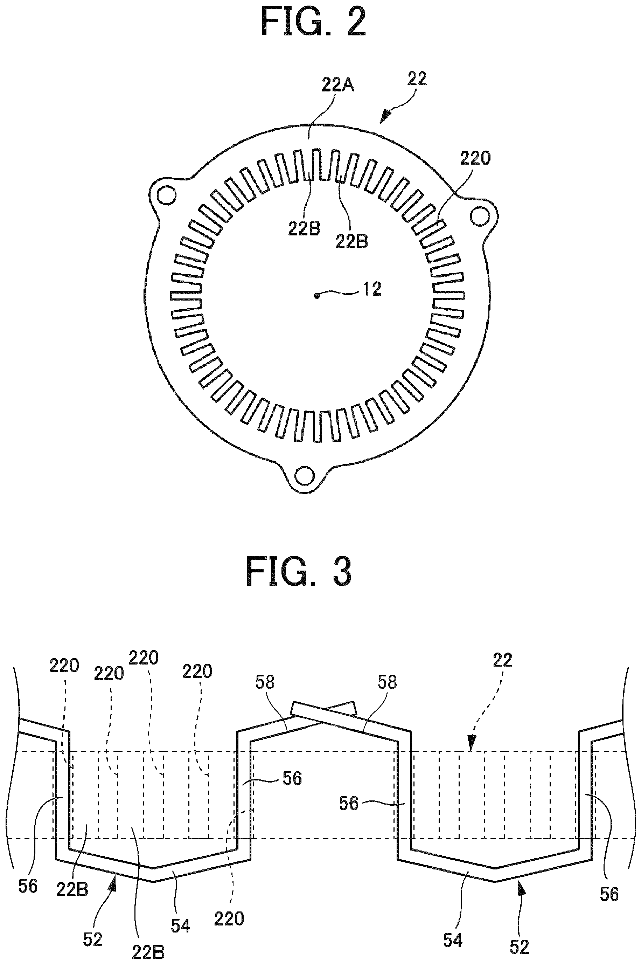

Next, the configuration related to the stator 21 will be described in detail with reference to FIG. 2 and the subsequent figures.

FIG. 2 is a plan view of a stator core 22 alone. FIG. 3 is a diagram schematically showing a pair of coil pieces 52 that is installed in the stator core 22. FIG. 3 shows the relationship between the pair of coil pieces 52 and slots 220 on the radially inner side of the stator core 22 shown opened out flat. In FIG. 3, the stator core 22 is shown by dashed lines, and part of the slots 220 is not shown.

The stator 21 includes the stator core 22 and the stator coil 24.

For example, the stator core 22 is made of, for example, magnetic steel laminations having an annular shape. In a modification, however, the stator core 22 may be made of a green compact obtained by pressing and compacting magnetic powder. The stator core 22 may be composed of divided cores in the circumferential direction, or may be in a form in which the stator core 22 is not divided in the circumferential direction. The plurality of slots 220 in which the stator coil 24 is wound is formed on the radially inner side of the stator core 22. Specifically, as shown in FIG. 2, the stator core 22 includes an annular back yoke 22A and a plurality of teeth 22B extending radially inward from the back yoke 22A, and the slots 220 are formed between the teeth 22B in the circumferential direction. Any number of slots 220 may be formed. In the present embodiment, 48 slots 220 are formed as an example.

The stator coil 24 includes a U-phase coil, a V-phase coil, and a W-phase coil (hereinafter referred to as "phase coils" when the phases U, V, and W are not distinguished from each other). The starting end of each phase coil is connected to an input terminal (not shown). The finishing end of each phase coil is connected to the finishing ends of the other phase coils to form a neutral point of the motor 1. That is, the stator coil 24 is connected in a star connection. However, the manner of connection of the stator coil 24 may be changed as appropriate according to the required motor characteristics etc. For example, the stator coil 24 may be connected in a delta connection instead of the star connection.

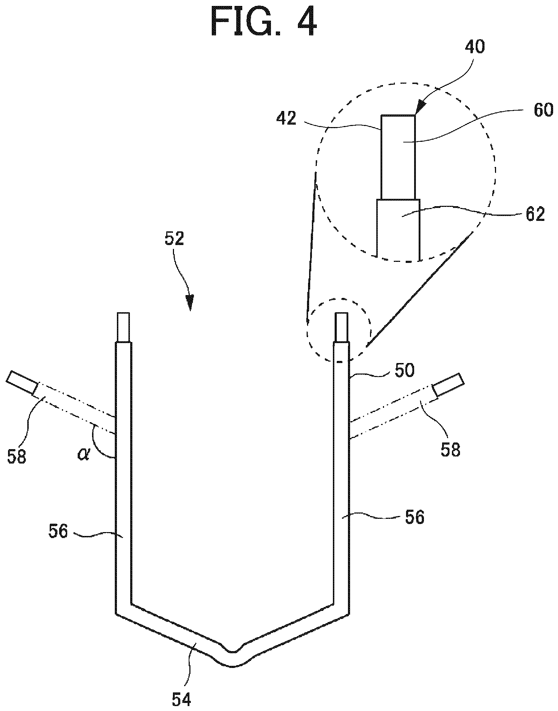

Each phase coil is formed by joining a plurality of coil pieces 52. FIG. 4 is a schematic front view of one coil piece 52. The coil pieces 52 are in the form of segment coils that are separate, easy-to-install units of phase coils (e.g. units each to be inserted into two slots 220). The coil piece 52 is formed by coating a linear conductor (rectangular wire) 60 having a rectangular cross section with an insulating coating 62. In the present embodiment, the linear conductor 60 is made of, for example, copper. In a modification, the linear conductor 60 may be made of a different conductor material such as iron.

Before being installed in the stator core 22, the coil piece 52 may be formed into a substantially U-shape having a pair of straight portions 50 and a connecting portion 54 connecting the pair of straight portions 50. When installing the coil piece 52 in the stator core 22, the pair of straight portions 50 is inserted into the slots 220 (see FIG. 3). As shown in FIG. 3, the connecting portion 54 thus extends in the circumferential direction across a plurality of teeth 22B (and therefore a plurality of slots 220) at the other axial end of the stator core 22. Although the connecting portion 54 may extend across any number of slots 220, the connecting portion 54 extends across three slots 220 in FIG. 3. After being inserted into the slots 220, the straight portions 50 are bent at an intermediate position in the circumferential direction, as shown by long dashed double-short dashed lines in FIG. 4. Each straight portion 50 is thus turned into a leg portion 56 extending in the axial direction in the slot 220 and a crossover portion 58 extending in the circumferential direction at one axial end of the stator core 22.

In FIG. 4, the pair of straight portions 50 is bent in directions away from each other. However, the present disclosure is not limited to this. For example, the pair of straight portions 50 may be bent in directions toward each other. The stator coil 24 may also have a neutral point coil piece etc. that connects the finishing ends of the three-phase coils to form a neutral point.

A plurality of leg portions 56 of the coil pieces 52 shown in FIG. 4 is inserted into one slot 220 side by side in the radial direction. A plurality of crossover portions 58 extending in the circumferential direction is thus arranged side by side in the radial direction at the one axial end of the stator core 22. As shown in FIG. 3, the crossover portion 58 of one coil piece 52 protruding from one slot 220 and extending toward a first side in the circumferential direction (e.g., clockwise direction) is joined to the crossover portion 58 of another coil piece 52 protruding from another slot 220 and extending toward a second side in the circumferential direction (e.g., counterclockwise direction).

In the present embodiment, for example, six coil pieces 52 are installed in one slot 220. Hereinafter, these coil pieces 52 are also referred to as first turn, second turn, and third turn from outside to inside in the radial direction, with the outermost coil piece 52 in the radial direction being the first turn. In this case, the first turn coil piece 52 and the second turn coil piece 52 are joined at their tip ends 40 by a joining process described later, the third turn coil piece 52 and the fourth turn coil piece 52 are joined at their tip ends 40 by the joining process described later, and the fifth turn coil piece 52 and the sixth turn coil piece 52 are joined at their tip ends 40 by the joining process described later.

Each coil piece 52 is covered with the insulating coating 62 as described above, but the insulating coating 62 is removed only from the tip ends 40. This is to ensure electrical connection with other coil pieces 52 at the tip ends 40.

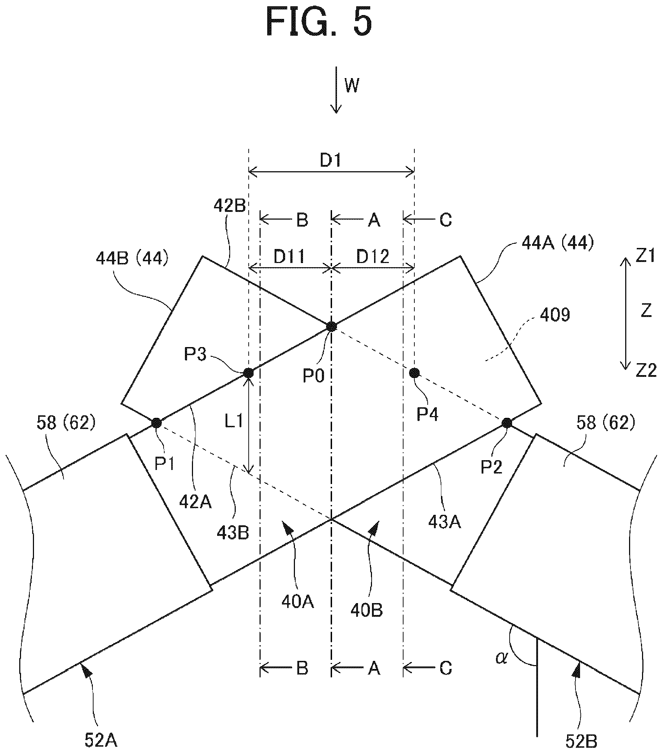

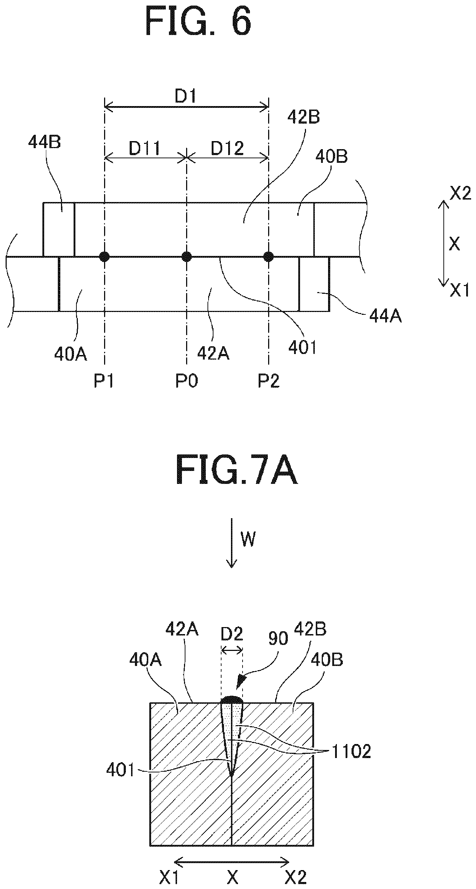

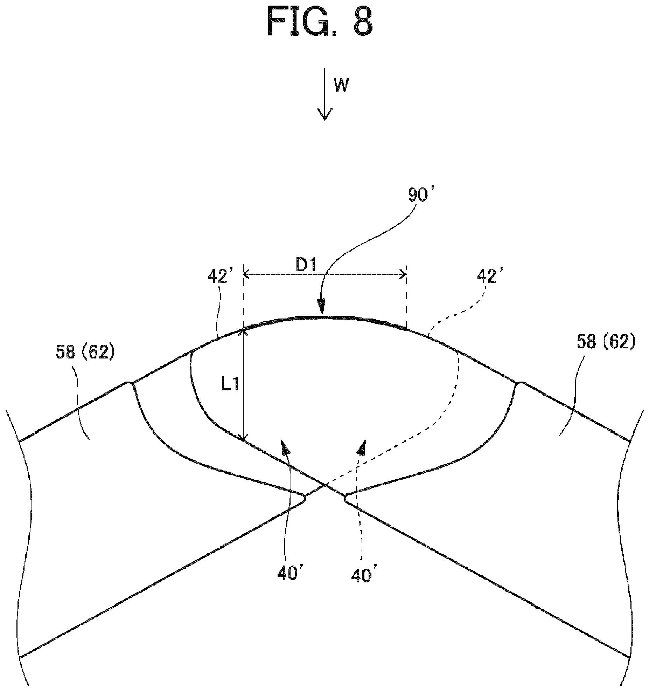

FIG. 5 is a diagram showing the joined tip ends 40 of the coil pieces 52 and the portions near the tip ends 40. FIG. 5 schematically shows a circumferential range D1 of a welding target portion 90. FIG. 6 is a diagram schematically showing the welding target portion 90 as viewed from the radiation side. FIGS. 7A to 7C are sectional views taken along lines A-A, B-B, and C-C in FIG. 5 passing through the welding target portion 90, respectively. In FIGS. 7A to 7C, the range of a molten pool formed during welding is schematically shown by hatched areas 1102. FIG. 8 is a diagram showing joined tip ends 40' of coil pieces 52' and portions near the tip ends 40' according to a comparative example as comparison with the configuration of the present embodiment shown in FIG. 5.

The Z direction along the axial direction is defined in FIG. 5. Hereinafter, for convenience of explanation, "upper" refers to the Z1 side in the Z direction (that is, the radiation side from which a laser beam 110 is radiated), and "lower" refers to the Z2 side in the Z direction. The X direction along the radial direction and the X1 and X2 sides in the X direction are defined in FIG. 6.

When joining the tip ends 40 of the coil pieces 52, the tip end 40 of one coil piece 52 and the tip end 40 of another coil piece 52 are brought into contact with each other in the radial direction such that these tip ends 40 cross over each other in an X-shape in the view shown in FIG. 5 (as viewed in a direction perpendicular to a contact surface 401, that is, as viewed in the radial direction). Hereinafter, for convenience of explanation, the configurations related to the one coil piece 52 are sometimes denoted by signs with the letter "A" at the end, like tip end 40A, and the configurations related to the another coil piece 52 are sometimes denoted by signs with the letter "B" at the end, like tip end 40B, in order to distinguish them from each other.

In this case, the welding target portion 90 extends linearly along the contact surface 401 as shown by the range D1 in FIG. 6. That is, the welding target portion 90 extends linearly along the range D1 with a width of a range D2 shown in FIGS. 7A to 7C, as viewed from the radiation side of the laser beam 110 (see arrow W in FIG. 5). In the example shown in FIG. 5, the contact surface 401 has the shape of a rhombus as viewed in the radial direction, with the upper two sides of the rhombus forming a C-shape facing downward, and the lower two sides of the rhombus forming a C-shape facing upward.

In the present embodiment, in the view shown in FIG. 5 (as viewed in the radial direction), the one coil piece 52 and the another coil piece 52 cross over each other in an X-shape as described above, and the welding target portion 90 extends on both sides of a point of intersection P0. Specifically, the welding target portion 90 is set along a C-shaped side (upper two sides of the rhombus) formed by axial outer end faces 42A, 42B of both tip ends 40 in the view shown in FIG. 5 (as viewed in the radial direction). Specifically, the welding target portion 90 is set in a range D11 from a point of intersection P1 to the point of intersection P0 and a range D12 from a point of intersection P2 to the point of intersection P0 in the view shown in FIG. 5 (as viewed in the radial direction). P1 is the point of intersection between the axial outer end face 42A (end face facing upward) of the tip end 40A of a coil piece 52A and an axial inner end face 43B (end face facing downward) of the tip end 40B of a coil piece 52B, and P2 is the point of intersection between the axial outer end face 42B (end face facing upward) of the tip end 40B of the coil piece 52B and an axial inner end face 43A (end face facing downward) of the tip end 40A of the coil piece 52A.

In this case, the welding target portion 90 is preferably a portion other than a portion near the point of intersection P1 and a portion near the point of intersection P2 (e.g., a section from a point of intersection P3 to a point of intersection P4). This is because it is difficult to ensure a sufficient welding depth (see dimension L1 in FIG. 5) in the portion near the point of intersection P1 and the portion near the point of intersection P2. The circumferential range D1 of the welding target portion 90 may be adapted so as to ensure a required joining area between the coil pieces 52, required welding strength, etc.

In the present embodiment, the joining method for joining the tip ends 40 of the coil pieces 52 is welding. In the present embodiment, the welding method may be arc welding represented by TIG welding, or may be laser welding in which a laser beam source is used as a heat source. The axial length of the coil ends 220A, 220B can be reduced by using the laser welding instead of the TIG welding. That is, in the case of the TIG welding, the tip ends of the coil pieces to be brought into contact with each other need to be bent axially outward so as to extend in the axial direction. In the case of the laser welding, however, such bending is not necessary, and as shown in FIG. 5, welding can be implemented with the tip ends 40 of the coil pieces 52 to be brought into contact with each other extending in the circumferential direction. The axial length of the coil ends 220A, 220B can thus be reduced compared to the case where the tip ends 40 of the coil pieces 52 to be brought into contact with each other are bent axially outward so as to extend in the axial direction.

In the laser welding, as schematically shown in FIG. 5, the welding laser beam 110 is applied to the welding target portion 90 in the two tip ends 40 that are in contact with each other. The radiation direction (propagation direction) of the laser beam 110 is substantially parallel to the axial direction, and is a direction from outside in the axial direction toward the axial outer end faces 42A, 42B of the two tip ends 40 that are in contact with each other. In the case of the laser welding, heating can be locally performed. Therefore, only the tip ends 40 and the portions near the tip ends 40 can be heated, and damage (carbonization) etc. to the insulating coating 62 can be effectively reduced. As a result, the plurality of coil pieces 52 can be electrically connected while maintaining appropriate insulation performance.

In the present embodiment, as shown in FIG. 7A, the laser beam 110 is applied so as to melt the edge on the contact surface 401 side of the axial outer end face 42A of the tip end 40 of the coil piece 52A (edge forming the C-shaped side) and the edge on the contact surface 401 side of the axial outer end face 42B of the tip end 40 of the coil piece 52B (edge forming the C-shaped side), at the connection position of the range D11 and the range D12, namely at the point of intersection P0. A required joining area can thus be easily obtained by the laser beam 110 at such a point of intersection P0 as shown in FIG. 7A.

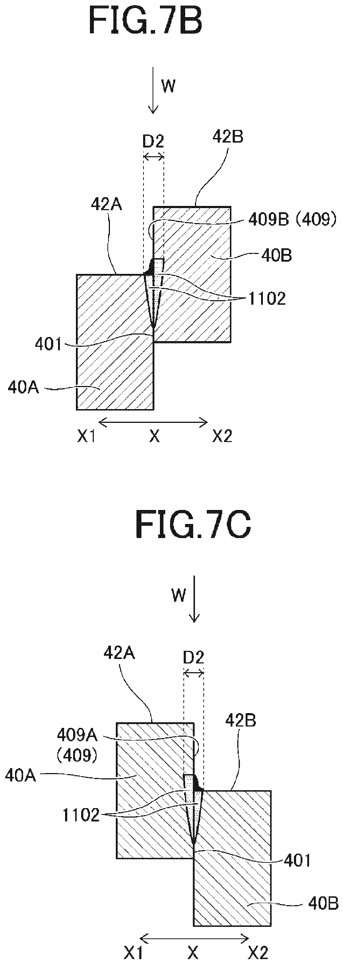

In the present embodiment, as shown in FIGS. 7B and 7C, the laser beam 110 melts, in each of the range D11 and the range D12, the edges on the contact surface 401 side of the axial outer end faces 42A, 42B (part of the C-shaped side) and part of an axially outer non-contact surface 409 that is continuous with the contact surface 401. In the case where the tip ends 40A, 40B of the coil pieces 52A, 52B are crossed over each other in an X-shape as viewed in the radial direction as described above, the tip ends 40A, 40B have non-contact surfaces 409A, 409B extending upward continuously from the contact surface 401, respectively. In the present embodiment, the reliability of the welded portion can be improved by implementing welding using such non-contact surfaces 409A, 409B. There are no such non-contact surfaces 409A, 409B in the comparative example shown in FIG. 8, which will be described later.

For example, in the range D11 in FIG. 6, as shown by the hatched areas 1102 of the molten pool in FIG. 7B, the laser beam 110 is applied so as to melt the edge on the contact surface 401 side of the axial outer end face 42A of the tip end 40A (edge forming the C-shaped side) and the edge on the contact surface 401 side of the non-contact surface 409 of the tip end 40B (edge at the boundary with the contact surface 401). A required joining area can thus be easily obtained by the laser beam 110 even in such a welding target portion 90 having a stepped portion in the axial direction at the contact surface 401 as shown in FIG. 7B.

Similarly, in the range D12 in FIG. 6, as shown by the hatched areas 1102 of the molten pool in FIG. 7C, the laser beam 110 is applied so as to melt the edge on the contact surface 401 side of the axial outer end face 42B of the tip end 40B (edge forming the C-shaped side) and the edge on the contact surface 401 side of the non-contact surface 409 of the tip end 40A (edge at the boundary with the contact surface 401). A required joining area can thus be easily obtained by the laser beam 110 even in such a welding target portion 90 having a stepped portion in the axial direction at the contact surface 401 as shown in FIG. 7C.

In the present embodiment, as shown in FIGS. 7A to 7C, the radial range D2 of the welding target portion 90 is a range about the contact surface 401 between the tip ends 40 of the two coil pieces 52. The radial range D2 of the welding target portion 90 may correspond to the diameter of the laser beam 110 (beam diameter). That is, the laser beam 110 is applied in such a manner that the radiation position changes linearly in the circumferential direction without substantially changing in the radial direction. In other words, the laser beam 110 is moved so that the radiation position changes in a linear pattern parallel to the contact surface 401. The laser beam 110 can thus be more efficiently applied to the linear welding target portion 90 compared to the case where the radiation position is changed in, for example, a loop (spiral) or zigzag (meandering) pattern. In the range D11, the laser beam 110 may be applied to the contact surface 401 from the X1 side in the X direction. In the range D12, the laser beam 110 may be applied to the contact surface 401 from the X2 side in the X direction.

In the comparative example as shown in FIG. 8, when joining the tip ends 40' whose axial outer end faces 42' have been machined into convex arc-shaped surfaces, one tip end 40' and another tip end 40' are butted together so as to form a C-shape in the view shown in FIG. 8 (as viewed in a direction perpendicular to the contact surface 401).

In the case of such a comparative example, the axial outer end faces 42' of the tip ends 40' are machined into convex arc-shaped surfaces. This can reduce irregularities in the axial direction in a welding target portion 90', but is disadvantageous in terms of machining cost because machining (e.g., press stamping) is required.

On the other hand, according to the present embodiment, the axial outer end faces 42A, 42B of the tip ends 40 are not machined into convex arc-shaped surfaces, unlike the tip ends 40' of the comparative example. That is, each tip end 40 has the axial outer end face 42A, 42B and a tip end face 44 that are continuous with each other and form a substantially right angle as viewed in the radial direction. Therefore, since the tip end 40 according to the present embodiment can be substantially formed by merely removing the insulating coating 62, the manufacturing cost can be reduced unlike the comparative example. The "substantially right angle" is a concept that not only includes a perfect right angle but also allows deviations (deviations from the perfect right angle) due to machining errors etc.

According to the present embodiment, the smaller the bending angle α of the coil piece 52, the easier it is to obtain a relatively large dimension L1 even though the point of intersection P3 (and also the point of intersection P4) is separated farther from the point of intersection P0 (that is, even though the length of the range D11 increases). Being able to obtain a relatively large dimension L1 means that it is easier to ensure a relatively large welding depth (and thus joining area). It is therefore easy to increase the length of the range D1 in which a required joining area can be ensured. The smaller the bending angle α of the coil piece 52, the more the axial size of the coil ends 220A, 220B can be reduced. Therefore, according to the present embodiment, the length of the range D1 in which a sufficient welding depth can be ensured can be increased while reducing the axial size of the coil ends 220A and 220B. The greater the length of the range D1 having a required joining area, the higher the reliability of the welded portion tends to be.

In the present embodiment, the tip ends 40A, 40B are crossed over each other in an X-shape in such a manner that an entire tip end face 44A of the tip end 40A is located above the axial outer end face 42B of the tip end 40B and an entire tip end face 44B of the tip end 40B is located above the axial outer end face 42A of the tip end 40A as viewed in the radial direction. In this case, it is easy to obtain a relatively long range D1 in which a required joining area can be ensured. Moreover, in this case, the laser beam 110 can be reliably applied to the range (range on the point of intersection P0 side) between the tip end face 44A of the tip end 40A and the tip end face 44B of the tip end 40B in the circumferential direction.

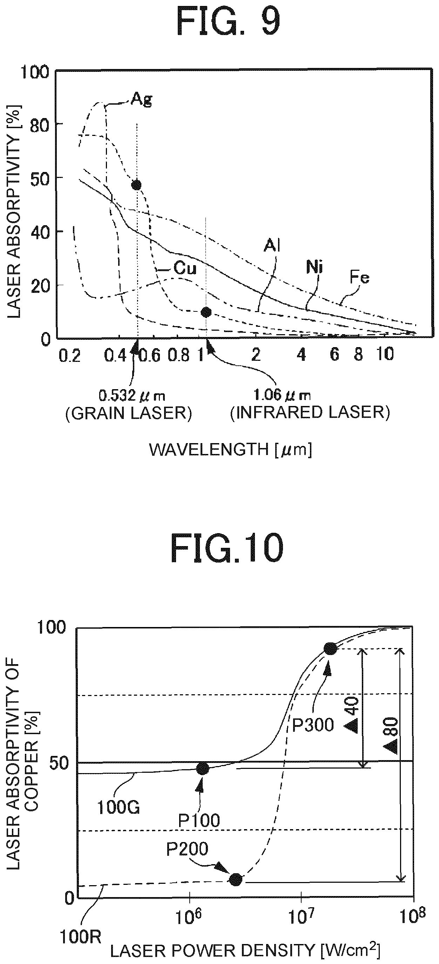

FIG. 9 is a diagram showing the relationship between the laser wavelength and the laser absorptivity (hereinafter sometimes simply referred to as "absorptivity") of samples of various materials. FIG. 9 shows characteristics of the samples of various materials, namely copper (Cu), aluminum (Al), silver (Ag), nickel (Ni), and iron (Fe), where the abscissa represents the wavelength λ, and the ordinate represents the absorptivity.

Copper that is a material of the linear conductor 60 of the coil piece 52 has an absorptivity as low as about 10% for an Infrared laser (laser with a wavelength of 1064 nm) that is commonly used in the laser welding, as shown by a black circle at the intersection with a dotted line of λ2 = 1.06 µm in FIG. 9. That is, in the case of the infrared laser, most of the laser beam 110 is reflected and not absorbed by the coil piece 52. Therefore, a relatively large amount of heat input is required in order to obtain a required joining area between the coil pieces 52 to be joined, and welding may become unstable due to the high heat effect.

In view of this, in the present embodiment, a green laser is used instead of the infrared laser. The "green laser" is a concept including not only a laser with a wavelength of 532 nm, that is, an SHG (Second Harmonic Generation: second harmonic) laser but also lasers with wavelengths close to 532 nm. In a modification, a laser with a wavelength of 0.6 µm or less that does not belong to the category of the green laser may be used. The wavelength of the green laser can be obtained by, for example, converting a fundamental wavelength generated by a YAG laser or a YVO4 laser through an oxide single crystal (e.g., LBO: lithium triborate).

Copper that is a material of the linear conductor 60 of the coil piece 52 has an absorptivity as high as about 50% for the green laser, as shown by a black circle at the intersection with a dotted line of λ1 = 0.532 µm in FIG. 9. Therefore, according to the present embodiment, a required joining area between the coil pieces 52 can be ensured with a smaller amount of heat input than in the case of using the infrared laser.

The characteristic that the absorptivity is higher for the green laser than for the infrared laser is remarkable in copper as shown in FIG. 9, but can be observed not only in copper but also in many of other metal materials. Therefore, welding with the green laser may be implemented even when a material other than copper is used for the linear conductor 60 of the coil piece 52.

FIG. 10 is a diagram illustrating how the absorptivity changes during welding. FIG. 10 shows a characteristic 100G for the green laser and a characteristic 100R for the infrared laser, where the abscissa represents the laser power density, and the ordinate represents the laser absorptivity of copper.

FIG. 10 shows points P100, P200 where copper starts to melt and a point P300 where a keyhole is formed in the case of the green laser and the infrared laser. As shown by the points P100, P200 in FIG. 10, it can be seen that, with the green laser, copper starts melting with a lower laser power density than the infrared laser. It can also be seen that, due to the difference in absorptivity described above, the difference between the absorptivity at the point P300 where a keyhole is formed and the absorptivity at the start of radiation (that is, the absorptivity when the laser power density is 0) is smaller for the green laser than for the infrared laser. Specifically, a change in absorptivity during welding is about 80% for the infrared laser, while a change in absorptivity during welding is about 40% for the green laser, which is about half the change for the infrared laser.

As described above, in the case of the infrared laser, the change (increase) in absorptivity during welding is as relatively large as about 80%. Therefore, the keyhole is more likely to become unstable, and variations in welding depth and welding width and disturbance of a molten pool (e.g., spatter etc.) are more likely to occur. On the other hand, in the case of the green laser, the change (increase) in absorptivity during welding is as relatively small as about 40%. Therefore, the keyhole is less likely to become unstable, and variations in welding depth and welding width and disturbance of a molten pool (e.g., spatter etc.) are less likely to occur. Spatter is metal particles etc. expelled by irradiation with a laser etc.

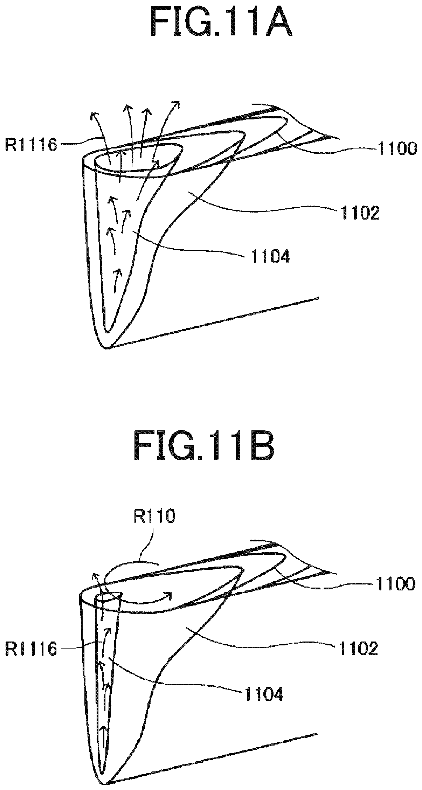

In the case of the infrared laser, the absorptivity is low as described above. It is therefore common to compensate for the low absorptivity by making the beam diameter relatively small (e.g., ϕ0.075 mm). This also contributes to the keyhole becoming unstable. FIG. 11B is an illustration of a keyhole etc. when the infrared laser is used, where 1100 indicates a weld bead, 1102 indicates a molten pool, and 1104 indicates a keyhole. Arrow R1116 schematically shows how gas is released. Arrow R110 schematically shows how the radiation position of the infrared laser is moved due to the small beam diameter. In the case of the infrared laser, the absorptivity is low and it is difficult to make the beam diameter relatively large, as described above. Therefore, a relatively long movement trajectory of the radiation position including meandering (relatively long continuous radiation time) tends to be necessary in order to obtain a required melting width.

On the other hand, in the case of the green laser, the absorptivity is relatively high as described above, and it is possible to make the beam diameter relatively large (e.g., ϕ0.1 mm or more). A large, stable keyhole can thus be formed. As a result, gas release is improved, and spatter etc. can be effectively reduced. FIG. 11A is an illustration of a keyhole etc. when the green laser is used. The definitions of the signs are as described above with reference to FIG. 11B. In the case of the green laser, it can be easily visually understood from FIG. 11A how a keyhole is stabilized and gas release is improved due to the increased beam diameter. In the case of the green laser, unlike the infrared laser, the absorptivity is relatively high and it is possible to make the beam diameter relatively large, as described above. Therefore, the movement trajectory of the radiation position (radiation time) necessary to obtain a required melting width (see the radial range D2 of the welding target portion 90 shown in FIGS. 7A to 7C) can be made relatively short (small).

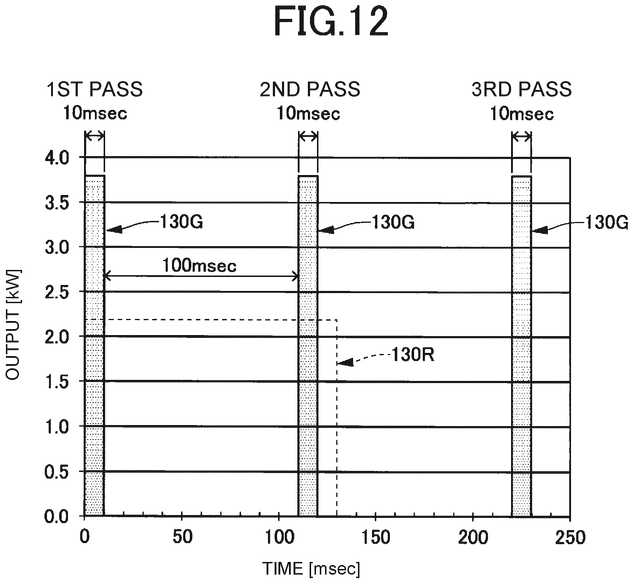

FIG. 12 is a diagram illustrating a welding method using the green laser according to the present embodiment. FIG. 12 schematically shows time-series waveforms of laser output during welding, where the abscissa represents time, and the ordinate represents laser output.

In the present embodiment, as shown in FIG. 12, welding is implemented by pulsed radiation of the green laser at a laser output of 3.8 kW. In FIG. 12, a pulse oscillation of a laser oscillator is implemented so that the laser output is 3.8 kW only for 10 msec, and after an interval of 100 msec, a pulse oscillation of the laser oscillator is again implemented so that the laser output is 3.8 kW only for 10 msec. Hereinafter, one pulse radiation (pulse radiation for 10 msec) that can be performed by one pulse oscillation as described above is also referred to as "one pass." In FIG. 12, radiations from the first pass (N = 1) to the third pass (N = 3) are shown by pulse waveforms 130G, where N indicates Nth pass. For comparison, FIG. 12 also shows a pulse waveform 130R of pulsed radiation of the infrared laser.

In the case of the green laser, the output of the laser oscillator is low (e.g., up to 400 W for continuous radiation), and it is difficult to obtain a high output necessary to ensure deep penetration (e.g., a laser output as high as 3.0 kW or more). That is, since the green laser is generated through a wavelength conversion crystal such as an oxide single crystal as described above, the output decreases when passing through the wavelength conversion crystal. Therefore, when continuous radiation of the laser beam of the green laser is attempted, a high output necessary to ensure deep penetration cannot be obtained.

In this regard, in the present example, a high output necessary to ensure deep penetration (e.g., a laser output as high as 3.0 kW or more) is obtained by pulsed radiation of the green laser, as described above. This is because, even when an output of, for example, only up to 400 W can be obtained by continuous radiation, a output as high as, for example, 3.0 kW or more can be achieved by pulsed radiation. Pulsed radiation is thus implemented by accumulating continuous energy for increasing peak power and performing pulsed oscillation. In the case where the circumferential range D1 of one welding target portion 90 is relatively wide as in the present embodiment, the one welding target portion may be subjected to a plurality of pulse oscillations. That is, the one welding target portion may be irradiated with two or more passes at a relatively high laser output (e.g., laser output of 3.0 kW or more). This makes it easy to ensure deep penetration in the entire welding target portion 90 and makes it possible to achieve high-quality welding even when the circumferential range D1 of the welding target portion 90 described above is relatively wide.

Although the interval is a specific value of 100 msec in FIG. 12, the interval can be set as desired, and may be minimized within a range in which a required high output is ensured. Although the laser output is a specific value of 3.8 kW in FIG. 12, the laser output may be changed as appropriate within a range in which a required welding depth is ensured, as long as the laser output is 3.0 kW or more.

FIG. 12 also shows the pulse waveform 130R when the infrared laser is continuously applied at a laser output of 2.3 kW for a relatively long time of 130 msec. Unlike the green laser, the infrared laser can be continuously applied at a relatively high laser output (2.3 kW). As described above, however, in the case of the infrared laser, a relatively long movement trajectory of the radiation position including meandering (relatively long continuous radiation time) is necessary in order to obtain a required melting width. In this case, the amount of heat input is about 312 J, which is significantly larger than about 80 J (in the case of two passes) that is the amount of heat input in the case of the green laser shown in FIG. 12.

As described above, according to the present embodiment, the use of the green laser enables welding with a laser beam for which the material of the linear conductor 60 of the coil piece 52 (in this example, copper) has higher absorptivity compared to the infrared laser. Accordingly, the movement trajectory of the radiation position (time) necessary to obtain a required melting width (see the radial range D2 of the welding target portion 90 shown in FIGS. 7A to 7C) can be made relatively short (small). That is, due to an increased keyhole per pulse oscillation with a relatively large beam diameter, the number of pulse oscillations necessary to obtain a required melting width can be made relatively small. As a result, a necessary joining area between the coil pieces 52 can be ensured with a relatively small amount of heat input.

According to the present embodiment, one welding target portion is irradiated with two or more passes of the green laser. This makes it easy to ensure deep penetration in the entire welding target portion 90 and makes it possible to achieve high-quality welding even when the circumferential range D1 of the welding target portion 90 is relatively wide.

In the present embodiment, as described above, the tip ends 40A, 40B of the coil pieces 52A, 52B are crossed over each other in an X-shape as viewed in the radial direction. Therefore, each of the tip ends 40A, 40B has the non-contact surface 409 extending upward continuously from the contact surface 401. The non-contact surface 409 can cause reflection of the laser beam 110 and may contribute to reduced reliability of the welded portion. Such reflection from the non-contact surface 409 is remarkable in the case of the infrared laser for which the absorptivity is low as described above. As described above, there is no such a non-contact surface 409 in the comparative example shown in FIG. 8.

In this regard, in the present embodiment, as described above, welding is implemented using the green laser for which the absorptivity is high. Therefore, reflection of the laser beam 110 at the non-contact surface 409 is reduced. As a result, as shown in FIGS. 7B and 7C and as described above, the laser beam 110 can also be applied to the non-contact surface 409 in such a manner that a molten pool is also formed in the non-contact surface 409. Therefore, a welded portion that is continuous from the non-contact surface 409 to the contact surface 401 can be formed.

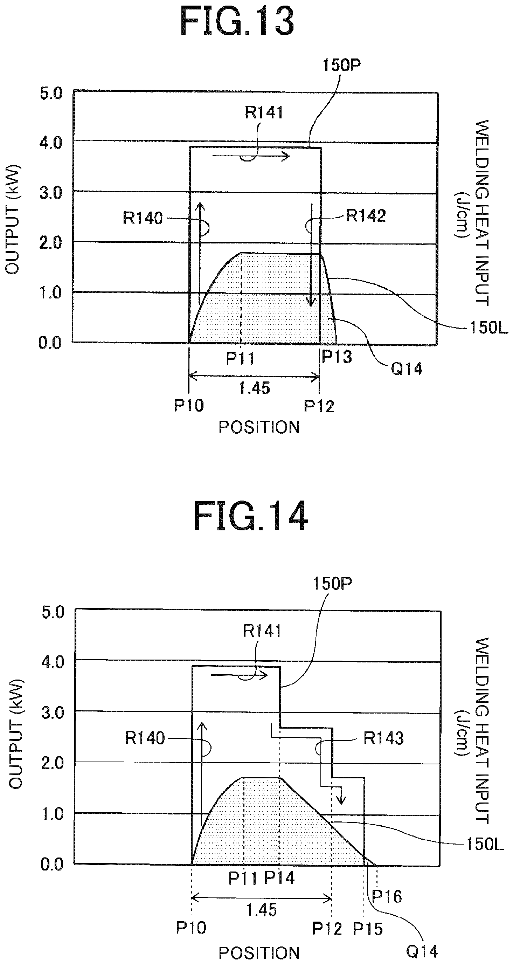

In the present embodiment, the laser output in one pass may be substantially constant, as shown in FIG. 13. FIG. 13 is a schematic diagram showing an example of how the laser output (and welding heat input) of one pass changes with the radiation position. A change characteristic 150P of the laser output according to the radiation position and a change characteristic 150L of the welding heat input according to the radiation position are schematically shown in FIG. 13. In FIG. 13, an area Q14 represents the overall amount of heat input of one pass.

In the example shown in FIG. 13, one pass is started from a position P10 that is a radiation start position. That is, one pulse oscillation is started from the position P10. In this case, the laser output rises to a predetermined value (in this example, 3.8 kW as an example) at the position P10 (see arrow R140). The radiation position is then linearly changed from the position P10 to a position P12. During this period, the laser output is kept at the predetermined value (in this example, 3.8 kW as an example) (see arrow R141). When the radiation position reaches the position P12 that is a radiation end position, the laser output is reduced from the predetermined value (in this example, 3.8 kW as an example) to 0 (see arrow R142). That is, one pulse oscillation is ended. Even when the radiation position reaches the position P12, the radiation position may be changed until it further moves to a position P13 that is separated by a small distance from the position P12. During this period, a small amount of welding heat input may be generated due to residual laser output (see Q14 in FIG. 13). In a modification, the change in radiation position may be ended when the radiation position reaches the position P12 or a position immediately before the position P12 (not shown).

According to such a radiation mode, the laser output rises to the predetermined value (in this example, 3.8 kW as an example) at the position P10, but the welding heat input does not instantly increase to its maximum value until the actual laser output reaches the predetermined value. Therefore, the welding heat input gradually increases while the radiation position changes from the position P10 to a position P11, as shown by the change characteristic 150L in FIG. 13. The laser output is instantaneously reduced to 0 at the position P12, but the welding heat input is kept at the maximum value until immediately before the position P12.

Such a radiation mode can be applied in various manners to the range D1 of the welding target portion 90 described above.

For example, when the range D1 of the welding target portion 90 described above is covered by one pass in the radiation mode shown in FIG. 13, the range D1 of the welding target portion 90 described above may be included in the section from the position P10 to the position P12 or the position P13 or in the section from the position P11 to the position P12 or the position P13.

When the range D1 of the welding target portion 90 described above is covered by two passes in the radiation mode shown in FIG. 13, each of the range D11 and the range D12 in the range D1 of the welding target portion 90 described above may be included in the section from the position P10 to the position P12 or the position P13 or from the position P11 to the position P12 or the position P13 for the first pass.

In particular, in the present embodiment, the above ranges D11, D12 in the welding target portion 90 are symmetrical with respect to the point of intersection P0 as viewed in the radial direction, as shown in FIG. 5. Therefore, in the present embodiment, it is preferable that the range D1 of the welding target portion 90 be covered by two passes.

In this case, in the first pass, the position P10 or the position P11 may correspond to the point of intersection P3, and the position P12 or the position P13 may correspond to the point of intersection P0. In the second pass, the position P10 or the position P11 may correspond to the point of intersection P4, and the position P12 or the position P13 may correspond to the point of intersection P0. In this case, each of the range D11 and the range D12 can be welded in such a manner that the range D11 and the range D12 have the same joining area.

Alternatively, in the first pass, the position P10 or the position P11 may correspond to the point of intersection P0, and the position P12 or the position P13 may correspond to the point of intersection P3. In the second pass, the position P10 or the position P11 may correspond to the point of intersection P0, and the position P12 or the position P13 may correspond to the point of intersection P4. In this case, each of the range D11 and the range D12 can be welded in such a manner that the range D11 and the range D12 have the same joining area.

In either case, the radiation range (that is, the range of movement of the radiation position) of the first pass and the radiation range of the second pass may overlap in a range about the point of intersection P0. This makes it easy to reliably ensure a required joining area at the point of intersection P0.

In a modification, the laser output in one pass may not be constant, as shown in FIG. 14. FIG. 14 is a schematic diagram showing another example of how the welding heat input of one pass changes with the radiation position. As in FIG. 13, a change characteristic 150P of the laser output according to the radiation position and a change characteristic 150L of the welding heat input according to the radiation position are schematically shown in FIG. 14.

In the example shown in FIG. 14, one pass is started from the position P10 that is a radiation start position. That is, one pulse oscillation is started from the position P10. In this case, the laser output rises to a predetermined value (in this example, 3.8 kW as an example) at the position P10 (see arrow R140). The radiation position is then linearly changed from the position P10 to the position P12. While the radiation position is changed from the position P10 to a position P14, the laser output is kept at the predetermined value (in this example, 3.8 kW as an example) (see arrow R141). When the radiation position reaches the position P14, the laser output is reduced stepwise from the predetermined value (in this example, 3.8 kW as an example) to 0 while the radiation position is further changed (see arrow R143). Specifically, when the radiation position reaches the position P14, the laser output is reduced by one decrement. When the radiation position then reaches the position P12, the laser output is further reduced by one decrement. When the radiation position then reaches a position P15 that is a radiation end position, the laser power is further reduced to 0. Even when the radiation position reaches the position P15, the radiation position may be changed until it further moves to a position P16 that is separated by a small distance from the position P15. During this period, a small amount of welding heat input may be generated due to residual laser output (see Q14 in FIG. 13). In a modification, the change in radiation position may be ended when the radiation position reaches the position P15.

Such a radiation mode can also be applied in various manners to the range D1 of the welding target portion 90 described above.

For example, when the range D1 of the welding target portion 90 described above is covered by one pass in the radiation mode shown in FIG. 14, the range D1 of the welding target portion 90 described above may be included in the section from the position P10 to the position P15.

When the range D1 of the welding target portion 90 described above is covered by two passes in the radiation mode shown in FIG. 14, each of the range D11 and the range D12 in the range D1 of the welding target portion 90 described above may be included in the section from the position P10 to the position P15 for the first pass.

In particular, in the present embodiment, the above ranges D11, D12 in the welding target portion 90 are symmetrical with respect to the point of intersection P0 as viewed in the radial direction, as shown in FIG. 5. Therefore, in the present embodiment, it is preferable that the range D1 of the welding target portion 90 be covered by two passes. In this case, in the first pass, the position P10 may correspond to the point of intersection P3, and the position P15 may correspond to the point of intersection P0. In the second pass, the position P10 may correspond to the point of intersection P4, and the position P15 may correspond to the point of intersection P0. In this case, each of the range D11 and the range D12 can be welded in such a manner that the range D11 and the range D12 have the same joining area.

Alternatively, in the first pass, the position P10 may correspond to the point of intersection P0, and the position P15 may correspond to the point of intersection P3. In the second pass, the position P10 may correspond to the point of intersection P0, and the position P15 may correspond to the point of intersection P4. In this case, each of the range D11 and the range D12 can be welded in such a manner that the range D11 and the range D12 have the same joining area.

In either case, the radiation range of the first pass and the radiation range of the second pass may overlap in a range about the point of intersection P0. This makes it easy to reliably ensure a required joining area at the point of intersection P0.

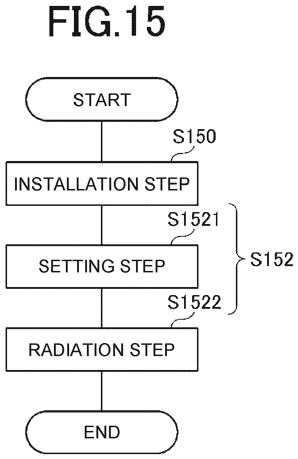

Lastly, the flow of a method for manufacturing the stator 21 of the motor 1 according to the present embodiment will be outlined with reference to FIG. 15.

FIG. 15 is a flowchart schematically showing the flow of the method for manufacturing the stator 21 of the motor 1.

First, this manufacturing method includes an installation step of installing the coil pieces 52 in the stator core 22 (step S150). This manufacturing method further includes a joining step of joining the tip ends 40 of the coil pieces 52 by laser welding after the installation step (step S152). The method for joining the tip ends 40 of the coil pieces 52 by laser welding is as described above.

In this case, the joining step includes a setting step of setting the tip ends 40 of the coil pieces 52 so that the tip ends 40 of each pair of coil pieces 52 contact each other in the radial direction so as to cross over each other in an X-shape as shown in FIG. 5 as described above (step S1521). In the setting step, the tip ends 40 of each pair of coil pieces 52 may be kept in contact with each other in the radial direction so as to cross over each other in an X-shape by using a jig etc.

The joining step includes a radiation step of applying the laser beam 110 to the welding target portion 90 as described above after the setting step (step S1522). The setting step and the radiation step may be performed in batches of one or more predetermined number of welding target portions 90 at a time, or may be performed on all the welding target portions 90 of one stator 21 at a time. This manufacturing method may be ended when the stator 21 is completed by performing various necessary steps as appropriate after the joining step.

Although the embodiments are described in detail above, the present disclosure is not limited to the specific embodiments, and various modifications and changes can be made within the scope of the claims. It is also possible to combine all or part of the constituent elements of the embodiments described above. Of the effects of each embodiment, those related to dependent claims are additional effects distinct from generic concepts (independent claim).

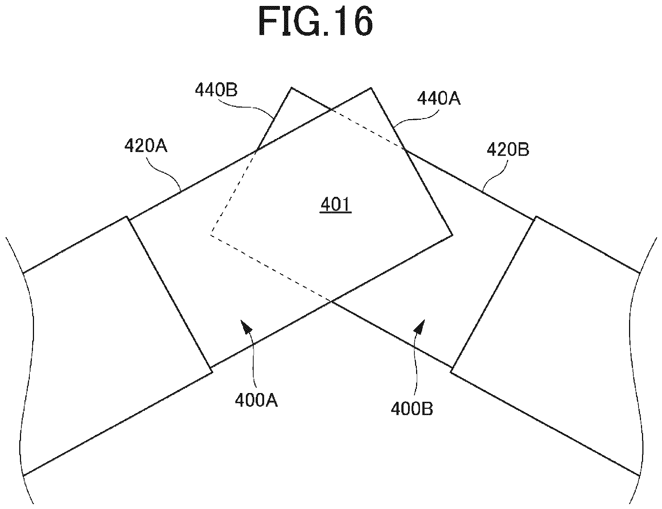

For example, in the above embodiment, as a preferred example, the tip ends 40A, 40B are crossed over each other in an X-shape in such a manner that the entire tip end face 44A of the tip end 40A is located above the axial outer end face 42B of the tip end 40B and the entire tip end face 44B of the tip end 40B is located above the axial outer end face 42A of the tip end 40A as viewed in the radial direction, as described above. However, the present disclosure is not limited to this. For example, as in a modification shown in FIG. 16, tip ends 400A, 400B may be crossed over each other in an X-shape in such a manner that only a radially outer part of a tip end face 440A is located above an axial outer end face 420B of the tip end 400B and only a radially outer part of a tip end face 440B of the tip end 400B is located above an axial outer end face 420A of the tip end 400A as viewed in the radial direction. In this case, the laser beam 110 may also be applied to the edges on the contact surface 401 side of the tip end faces 440A, 440B.

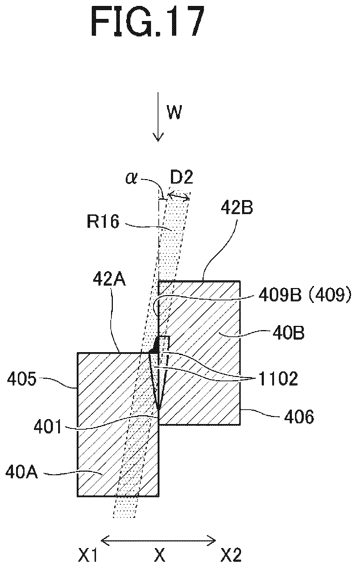

In the above embodiment, the radiation direction of the laser beam 110 is substantially parallel to the contact surface 401. For example, the radiation direction of the laser beam 110 may be deviated by such a relatively small angle α as shown in FIG. 17 (e.g., ±10 degrees) as viewed parallel to the contact surface 401. There are cases where welding is performed on a plurality of portions by changing the angle from a radiation source of the laser beam 110 using a mirror (not shown). In such cases, the angle α tends to be larger than 0 but relatively small (e.g., ±10 degrees). Even when the angle α is larger than 0, as in the case where the angle α is 0, the radiation width of the laser beam may include the C-shaped side described above (edges on the contact surface 401 side of the axial outer end faces 42A, 42B), the non-contact surface 409A or 409B, and the contact surface 401, as viewed in a direction parallel to the contact surface 401. The expression "the radiation width includes the C-shaped side etc." means that the radiation range having a width corresponding to the radiation width of the laser beam as shown in FIG. 17 and extending in the radiation direction (shown by a hatched area R16 in FIG. 17) includes the C-shaped side etc. The angle α (and the range D2 described above) may be adapted so that opposite outer surfaces 405, 406 (see FIG. 17) of the tip ends 40A, 40B that are parallel to the contact surface 401 will not be irradiated with the laser beam 110 in the radiation step described above. In this case, since the melted portion is small, the influence of heat on the insulating coatings 62 of the coil pieces 52 is reduced, and the portion of each coil piece 52 from which the insulating coating 62 is removed can be minimized. As a result, cost reduction can be achieved.

### Description of the Reference Numerals

1 ... motor (rotating electrical machine), 24 ... stator coil, 52 ... coil piece, 40 ... tip end (end), 401 ... contact surface, 409 ... non-contact surface, 42 (42A, 42B) ... axial outer end face (end face on axially outer side), 44A, 44B ... tip end face, 22 ... stator core, 110 ... laser beam

## Claims

1. A method for manufacturing a stator for a rotating electrical machine, the method comprising:
an installation step of installing coil pieces with a rectangular cross section for a stator coil in a stator core; and
a joining step of joining ends of the coil pieces by laser welding after the installation step, wherein
the joining step includes
a setting step of bringing the ends into contact with each other in a radial direction in such a manner that the ends cross over each other in an X-shape as viewed in the radial direction, and
a radiation step of applying a laser beam with a wavelength of 0.6 µm or less in an axial direction toward a C-shaped side, as viewed in the radial direction, of a contact surface between the ends after the setting step, and
part of the C-shaped side and part of an axially outer non-contact surface that is continuous with the contact surface between the ends are melted in the radiation step.

2. The method for manufacturing a stator for a rotating electrical machine according to claim 1, wherein a radiation width of the laser beam includes the C-shaped side, the non-contact surface, and the contact surface as viewed in a direction parallel to the contact surface.

3. The method for manufacturing a stator for a rotating electrical machine according to claim 1 or 2, wherein the radiation step is performed in such a manner that opposite outer surfaces of the ends that are parallel to the contact surface are not irradiated with the laser beam.

4. The method for manufacturing a stator for a rotating electrical machine according to any one of claims 1 to 3, wherein
the end of the coil piece includes an end face on an axially outer side and a tip end face that are continuous with each other and form a substantially right angle as viewed in the radial direction, and
in the setting step, the ends are crossed over each other in the X-shape in such a manner that the entire tip end face of one of the ends is located above the end face on the axially outer side of the other end as viewed in the radial direction.

5. The method for manufacturing a stator for a rotating electrical machine according to any one of claims 1 to 4, wherein
the laser beam is generated for each pulse oscillation in a laser oscillator, and
in the radiation step, a set of the ends is joined by two or more of the pulse oscillations.

6. The method for manufacturing a stator for a rotating electrical machine according to claim 5, wherein
the radiation step includes
a first radiation step of irradiating one side of the C-shaped side with respect to a point of intersection of the X-shape with the laser beam by one pulse oscillation, and
a second radiation step of irradiating the other side of the C-shaped side with respect to the point of intersection of the X-shape with the laser beam by another pulse oscillation.

7. The method for manufacturing a stator for a rotating electrical machine according to claim 6, wherein
the first radiation step includes linearly changing a radiation position of the laser beam in a direction along the contact surface,
the second radiation step includes linearly changing the radiation position of the laser beam in the direction along the contact surface, and
each of a movement range of the radiation position of the laser beam in the first radiation step and a movement range of the radiation position of the laser beam in the second radiation step includes the point of intersection of the X-shape.
